# EUROPEAN PATENT APPLICATION

(11) **EP 2 523 394 A1**
(43) Date of publication of application: **14.11.2012**
(21) Application number: 12275061.5
(22) Date of filing: 04.05.2012
(51) Int. Cl.: H04L 12/26

(54) **Method and Apparatus for Distinguishing and Sampling Bi-Directional Network Traffic at a Conversation Level**

(30) Priority: 12.05.2011 US 201113106821
(71) Applicant: Fluke Corporation, Everett, WA 98203 (US)
(72) Inventor: Monk, John, Larkspur, Colorado 80919 (US); Prescott, Dan, Elbert, Colorado 80106 (US); Vogt, Robert, Colorado Springs, Colorado 80920 (US)
(74) Representative: Lock, Howard John

(57) **Abstract**

Network traffic (14) is distinguished at a conversation level, providing sampling decision capability. A hash value is determined based on IP addresses and protocol type, giving unique identifiers for individual conversations.

## Description

### Technical Field

This invention relates to networking, and more particularly but not exclusively to distinguishing and sampling network traffic at a conversation level.

### Background Art

Application performance management (APM) uses monitoring and/or troubleshooting tools for observation of network traffic and for network and application optimization and maintenance. In high traffic networks, data volume can lead to oversubscription- the condition where the incoming data rate is too high for network/application monitoring systems to process. One way this problem manifests itself is in terms of analysis latency. There is software latency in all application specific application analyzers (applications such as: Http, Oracle, Citrix, TCP, etc). When it is attempted to analyze too much data, the aggregate latency across various discrete portions of a monitoring system puts enough collective drag on the overall system that it becomes difficult to keep up with processing and analyzing the incoming data. It is computationally impractical to perform full analysis in real time of every packet/flow/conversation on a highly utilized computer network.

### Summary of invention

According to one aspect of this invention, there is provided a method of distinguishing network traffic at a conversation level, comprising:

determining a hash value based on a conversation; and

employing the hash value to identify the conversation.

According to another aspect of this invention, there is provided a system for distinguishing network traffic at a conversation level, comprising:

a network traffic monitor for observing network traffic; and

a hash generator for determining a hash value to identify observed traffic.

According to another aspect of this invention there is provided a network test instrument for distinguishing network traffic at a conversation level, comprising:

a network interface for observing network traffic; and

a traffic classifier to determine an identifier to classify the observed network traffic.

An advantage of the preferred embodiment of this invention is that it provides for packet characterization and sample selection based on socket connections and conversations, addressing the problem of not being able to generate accurate performance measurements when traffic rates exceed the measurement device capability.

It is another advantage of the preferred embodiment of the present invention that it provides an improved network data sampling.

It is a further advantage of the preferred embodiment of the present invention that it provides an improved network monitoring system that distinguishes network traffic at a conversation level.

It is yet another advantage of the preferred embodiment of the present invention that it provides improved methods of network monitoring and analysis that enable improved distinguishing and sampling of network traffic at a conversation level.

The subject matter of the present invention is particularly pointed out and distinctly claimed in the concluding portion of this specification. However, both the organization and method of operation, together with further advantages thereof, may best be understood by reference to the following description taken in connection with accompanying drawings wherein like reference characters refer to like elements.

### Brief description of drawings

FIG. 1 is a block diagram of a network with a network analysis product interfaced therewith;

FIG. 2 is a block diagram of a monitor device for distinguishing and sampling bi-directional network traffic at a conversation level; and

FIG. 3 is a flow chart of an example determination of a conversation identifier.

### Detailed Description

The system according to a preferred embodiment of the present invention comprises a monitoring system and method and an analysis system and method for distinguishing and sampling bi-directional network traffic at a conversation level.

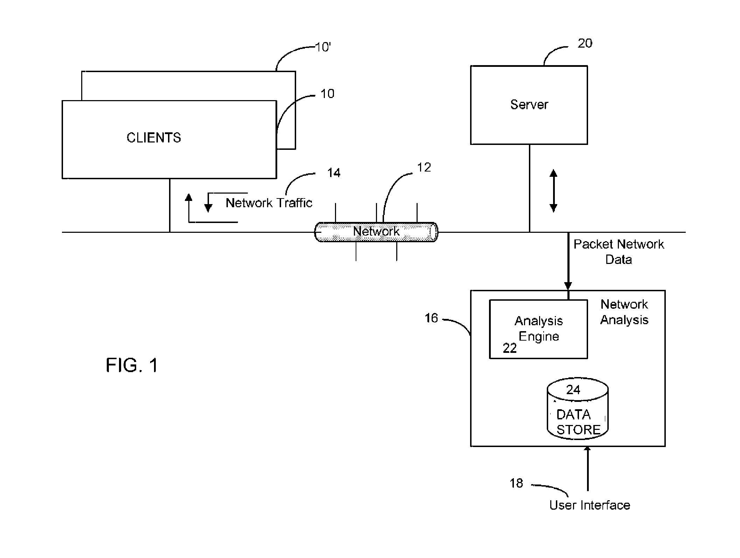

Referring to FIG. 1, a block diagram of a network with an apparatus in accordance with the disclosure herein, a network may comprise plural network clients 10, 10', etc., which communicate over a network 12 by sending and receiving network traffic 14 via interaction with server 20. The traffic may be sent in packet form, with varying protocols and formatting thereof.

A network analysis device 16 is also connected to the network, and may include a user interface 18 that enables a user to interact with the network analysis device to operate the analysis device and obtain data therefrom, whether at the location of installation or remotely from the physical location of the analysis product network attachment.

The network analysis device comprises hardware and software, CPU, memory, interfaces and the like to operate to connect to and monitor traffic on the network, as well as performing various testing and measurement operations, transmitting and receiving data and the like. When remote, the network analysis device typically is operated by running on a computer or workstation interfaced with the network. One or more monitoring devices may be operating at various locations on the network, providing measurement data at the various locations, which may be forwarded and/or stored for analysis.

The analysis device comprises an analysis engine 22 which receives the packet network data and interfaces with data store 24.

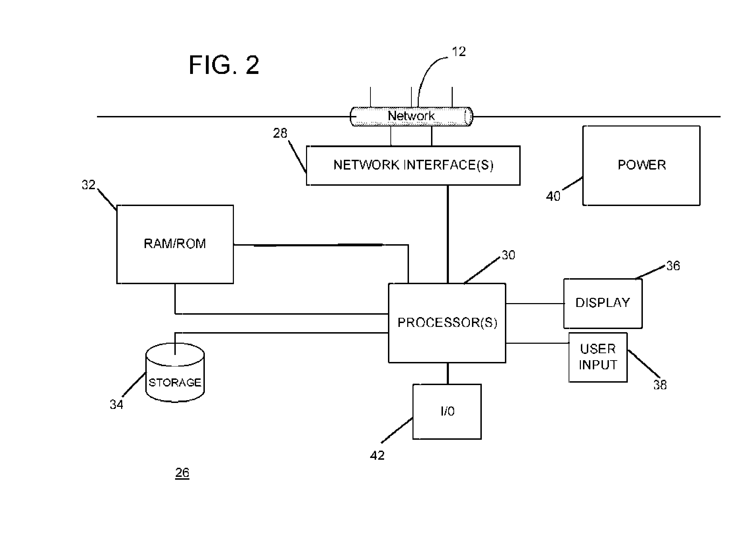

FIG. 2 is a block diagram of a test instrument/analyzer 26 via which the invention can be implemented, wherein the instrument may include network interfaces 28 which attach the device to a network 12 via multiple ports, one or more processors 30 for operating the instrument, memory such as RAM/ROM 32 or persistent storage 34, display 36, user input devices 38 (such as, for example, keyboard, mouse or other pointing devices, touch screen, etc.), power supply 40 which may include battery or AC power supplies, other interface 42 which attaches the device to a network or other external devices (storage, other computer, etc.).

In operation, the network test instrument is attached to the network, and observes transmissions on the network to collect data and analyze and produce statistics and metadata thereon. Distinguishing and sampling of the network data at a conversation level enables coherent and consistent grouping and analysis of data and selection and differentiation of data of interest while allowing data not of interest to be ignored.

To accomplish the distinguishing and sampling, a one way hash is made on conversations between two hosts based on identifying factors in the observed data, for example, a client IP address, the server IP address and the communication protocol being used between the two hosts. Each host has a unique IP address, and the client/server pair communicate with each other using a specific network protocol. The one way hash allows generating a unique identifier for a particular conversation. A conversation can then be sampled if it is a conversation of interest, and processed or stored based on the hash value. This allows a quick way to distinguish traffic at a conversation level, enabling decisions of whether the data is of interest and further processing to be quickly made.

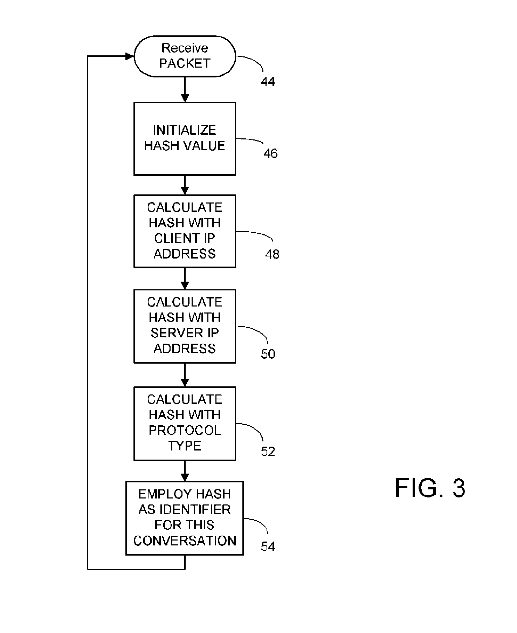

FIG. 3 is a flow chart of the process, wherein an observed packet exchanged between a client and server is selected at 44, and the value of the hash function is initialized at block 46. Next, the hash value is calculated at block 48, 50, 52 using the client IP address, the server IP address and the protocol type. The determined hash value may then be employed as a unique identifier as to the conversation to which this packet belongs. The example of FIG. 3 illustrates a case with 3 separate calculations of hash based on client address, server address and protocol type, as an example and for convenience of illustration. The particular hash function and the manner of implementing the hash function can result in the hash keys being combined in a single step or multiple steps.

As an example, in a particular embodiment, the hash function is chosen to be a CRC (cyclic redundancy check) function, crc32, applied to the source IP, destination IP and protocol type fields of a data packet. The hash determination may be performed by a network test instrument in accordance with the disclosure herein, by specific hash calculation hardware, or by software, in according with the speed required in the particular embodiment and operation environment.

An example of using crc32 with accommodation of both IPV4 (32 bit) and IPV6 (128 bit) addresses is provided by the following, where client-IP-address[] is an array of 32 bit IP address values is given below. The example assumes that the address type is either IPV4 or IPV6, initially calculating the hash on the first 32 bits of address, and, if the address is IPV6 type, then calculating the hash using the additional 96 bits of the address:

hash = crc32(client-IP-address[0]);

if client-address-type == IPV6

{

hash = crc32(client-IP-address[1], hash);

hash = crc32(client-IP-address[2], hash);

hash = crc32(client-IP-address[3], hash);

}

hash = crc32(server-IP-address[0], hash);

if server-address-type == IPV6

{

hash = crc32(server-IP-address[1], hash);

hash = crc32(server-IP-address[2], hash);

hash = crc32(server-IP-address[3], hash);

}

hash = crc32(protocol-type, hash)

The resulting hash value is then provides a unique way to identify the conversation as to protocol type and the sender and receiver.

In the particular example above, a CRC function is employed, but other one way hash functions may be employed. In this way, the likelihood of a hash collision between multiple hosts/protocols is minimized. Accordingly, conversations between unique client/server pairs on a computer network can be accurately tracked.

The invention provides ability to aggregate network packets into higher level constructs (conversations) that are uniquely identified by a generated ID derived from client/server IP addresses and the relevant network protocol used between them. Traffic sampling and hence, dynamic scaling, is then possible based on the conversation rather than individual packets. Other portions or combinations of portions of the conversation can be used for distinguishing and sampling, in addition to the IP addresses/protocol type example illustrated herein.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A method of distinguishing network traffic at a conversation level, comprising: determining a hash value based on a conversation; and employing the hash value to identify the conversation.

2. A method according to claim 1, wherein said determining a hash value comprises employing portions of the conversation as inputs to a hash determining function to provide an identifier for the conversation.

3. A method according to claim 2, wherein said portions of the conversation comprises an IP address of a first party to the conversation, and an IP address of a second party to the conversation.

4. A method according to claim 3, wherein said portions of the conversation further comprise a protocol type identifier.

5. A method according to claim 1, wherein said determining a hash value comprises employing a CRC function to generate the hash value based on an IP address of a first party to the conversation, and an IP address of a second party to the conversation as inputs to the CRC function.

6. A method according to claim 1, wherein said determining a hash value comprises employing a CRC function to generate the hash value based on an IP address of a first party to the conversation, an IP address of a second party to the conversation and a protocol type as inputs to the CRC function.

7. A method according to claim 1, further comprising employing said hash value to determine sampling of the conversation.

8. A system for distinguishing network traffic at a conversation level, comprising: a network traffic monitor for observing network traffic; and a hash generator for determining a hash value to identify observed traffic.

9. A system according to claim 8, wherein said hash generator employs an IP address of a first party to the conversation, and an IP address of a second party to the conversation as inputs to the hash generator for determining the hash value.

10. A system according to claim 9, wherein said hash generator employs a protocol type identifier as an input to the hash determining function.

11. A system according to claim 8, wherein said hash generator comprises a CRC computing device to generate the hash value.

12. A system according to claim 8, wherein said hash generator comprises employing a CRC function generator to generate the hash value based on an IP address of a first party to the conversation, and an IP address of a second party to the conversation as inputs to the CRC function.

13. A system according to claim 8, wherein said hash generator comprises a CRC function generator to generate the hash value based on an IP address of a first party to the conversation, an IP address of a second party to the conversation and a protocol type as inputs to the CRC function.

14. A system according to claim 8, further comprising a sampler employing said hash value to determining sampling of the conversation.

15. A network test instrument for distinguishing network traffic at a conversation level, comprising: a network interface for observing network traffic; and a traffic classifier to determine an identifier to classify the observed network traffic.

16. A network test instrument according to claim 15, wherein said traffic classifier comprises a hash generator for generating an identifier based on components of said network traffic.

17. A network test instrument according to claim 16, wherein said hash generator employs an IP address of a first party to the conversation, an IP address of a second party to the conversation, and a protocol identifier for the conversation as inputs to the hash generator for determining the hash value.

18. A network test instrument according to claim 17, wherein said hash generator comprises a CRC computing device to generate the hash value.

19. A network test instrument according to claim 16, wherein said hash generator comprises a CRC computing device to generate the hash value.
